# FASCICULE DE BREVET EUROPEEN

(11) **EP 2 737 300 B1**
(45) Date de publication et mention de la délivrance du brevet: **23.08.2023**
(21) Numéro de dépôt: 12728454.5
(22) Date de dépôt: 12.06.2012
(51) Int. Cl.: G01J 3/02, G01N 21/3504, G01N 21/3563, G01N 21/3577, G01N 21/552, G01N 21/85, G01J 3/42

(54) **TÊTE POUR UN CAPTEUR À FIBRE OPTIQUE À ONDES ÉVANESCENTES**
KOPF FÜR EINEN EVANESZENZWELLEN-GLASFASERSENSOR
HEAD FOR AN EVANESCENT-WAVE FIBRE-OPTIC SENSOR

(30) Priorité: 29.07.2011 FR 1156945
(43) Date de publication de la demande: 04.06.2014
(73) Titulaire: Diafir, 35000 Rennes (FR)
(72) Inventeur: TARIEL, Hugues, F-35000 Rennes (FR)
(74) Mandataire: Cabinet Le Guen Maillet
(86) Numéro de dépôt international: PCT/EP2012/061130
(87) Numéro de publication internationale: WO 2013/017324

(56) Documents cités:
- WO-A1-2011/121086
- DE-A1- 4 038 354
- US-A1- 2004 118 997

## Description

La présente invention concerne une tête pour un capteur comportant une fibre optique permettant la propagation de la lumière infrarouge à au moins une longueur d'onde infrarouge et générant vers l'extérieur des ondes évanescentes pour détecter des signatures infrarouges d'un milieu extérieur. La présente invention concerne également un capteur présentant une telle tête et un système de spectrométrie utilisant un tel capteur.

L'évolution, ces dernières années, des fibres optiques a permis le développement de capteurs utilisés pour mettre en oeuvre une technique de spectrométrie infrarouge particulière dont l'originalité est liée à l'existence d'une onde évanescente qui parcourt la surface extérieure de la fibre quand celle-ci est traversée par un flux de lumière infrarouge. Le principe de ces capteurs est d'émettre une onde infrarouge dans la fibre optique. Cette onde se propage à l'intérieur et le long de la fibre ; lorsqu'un milieu extérieur est mis en contact avec cette fibre, la propagation de l'onde est alors perturbée du fait que certaines longueurs d'onde de l'onde sont absorbées par le milieu extérieur. Il suffit alors de comparer le spectre infrarouge de l'onde émise avec celui de l'onde reçue pour déduire quelles sont les longueurs d'onde qui ont été absorbées et par suite quelles sont les substances qui sont contenues dans le milieu extérieur.

Dans l'état de l'art, cette technique est connue sous l'appellation FEWS (*Fiber Evanescent Wave Specrometry* en anglais). Cette technique présente l'avantage de déporter le signal infrarouge du spectromètre vers le lieu de l'analyse et non l'inverse, permettant, d'une part, des analyses *in-situ* en temps réel et, d'autre part, évitant de fausser les résultats par prélèvement d'échantillons.

La technique FEWS peut être utilisée dans des domaines variés tels que médical ou agro-alimentaire pour analyser des substances chimiques ou biologiques d'un milieu liquide, solide ou gazeux qui est extérieur à la fibre.

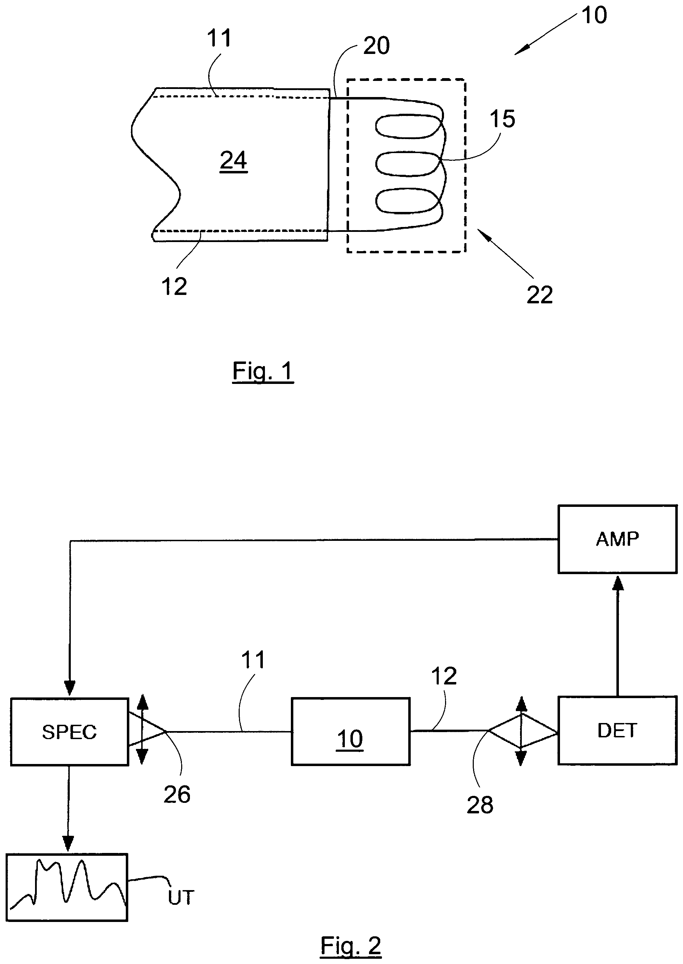

La Fig. 1 représente un exemple d'un capteur 10 à fibre optique à ondes évanescentes classiquement utilisé pour la mise en oeuvre de la technique FEWS.

Le capteur 10 comporte une (voire plusieurs) fibre optique à ondes évanescentes. Par la suite, on considérera que le capteur n'en comporte qu'une seule sans pour autant limiter la portée de la présente invention.

Le capteur 10 présente une gaine de protection 24, un connecteur 20 et une tête 22.

La gaine de protection 24 est parcourue par la fibre optique qui comporte deux tronçons 11 et 12 de fibre qui ont pour fonction de guider une onde infrarouge d'un point émetteur à un point récepteur et une partie courbe 15 qui relie les deux tronçons de fibre 11 et 12.

La partie courbe 15 est montée sur la tête 22 peut se présenter sous diverses formes. Elle peut, par exemple, être en forme de coude, de méandres, ou encore être en forme d'un quelconque enroulement ayant une ou plusieurs spires. La Fig. 1 montre très schématiquement que la partie courbe 15 a la forme d'un enroulement comprenant plusieurs spires.

Cette partie courbe 15 peut être désolidarisée des deux tronçons 11 et 12 au niveau du connecteur 20. La tête 22 comporte une partie du connecteur 20 qui est adapté pour s'embrocher sur l'autre partie du connecteur 20 alors présent sur la gaine de protection 24 du capteur 10. La tête 22 du capteur 10 peut alors être facilement remplacée en cas, par exemple, d'endommagement de cette partie lors de l'utilisation du capteur 10.

Les deux tronçons de fibre 11 et 12 sont ainsi logés dans la gaine de protection 24 tandis que la partie courbe 15 dépasse au moins partiellement de la gaine de protection 24. Cette partie courbe 15 est alors destinée à venir en contact avec le milieu extérieur pour détecter les signatures infrarouges perturbant la propagation des ondes évanescentes se propageant le long de la fibre.

Une fibre optique à ondes évanescentes peut être fabriquée à partir de divers matériaux, habituellement des verres, qui offrent une fenêtre spectrale dans le domaine de l'infrarouge, en particulier dans l'infrarouge moyen qui s'étale approximativement de 40 à 5000 cm⁻¹, ou encore lointain qui s'étale approximativement de 10 à 400 cm⁻¹. Cette fibre optique à ondes évanescentes a un diamètre de quelques centaines voire quelques dizaines de micromètres. Ce diamètre n'est pas forcément constant le long de la fibre et certaines parties de la fibre peuvent présenter un diamètre plus petit, en particulier au niveau de la partie courbe 15.

Les verres de chalcogénure sont l'un des matériaux utilisés pour fabriquer de telles fibres optiques. L'un des avantages de ces verres, à base notamment de Soufre, de Sélénium et/ou de Tellure, est qu'ils laissent passer la lumière sur une large gamme de longueur d'onde dans l'infrarouge ce qui n'est pas le cas, par exemple, des verres d'oxydes classiques. De plus la nature vitreuse du matériau permet de le mettre en forme pour fabriquer des fibres optiques. Enfin, la nature des liaisons chimiques de ce matériau le rend hydrophobe ce qui est avantageux lors de son utilisation comme capteur dans les milieux riches en eau tels que les échantillons biologiques.

Toutefois, les capteurs à fibre optique à ondes évanescentes présentent l'inconvénient d'utiliser une fibre optique en verre d'un diamètre relativement petit.

La partie sensible du capteur devant entrer en contact direct avec le milieu étudié, celle-ci doit donc être laissée nue et exposée aux éléments extérieurs. La partie courbe 15 est donc sujette à se briser de par la relative fragilité du matériau utilisé et du faible diamètre de ces fibres. La solution actuelle est alors de remplacer la partie courbe 15 en cas d'endommagement ce qui implique un coût d'entretien à longs termes de ces capteurs qui est élevé.

Le document DE-A-40 38 354 divulgue une tête pour un capteur à fibre optique.

Le problème résolu par la présente invention est de proposer une tête qui augmente la robustesse mécanique de la partie courbe 15 de la fibre optique d'un capteur à fibre optique à ondes évanescentes.

A cet effet, la présente invention propose, comme définit dans la revendication 1, une tête pour un capteur comportant deux tronçons de fibre optique permettant la propagation de la lumière infrarouge à au moins une longueur d'onde infrarouge et générant vers l'extérieur des ondes évanescentes pour détecter des signatures infrarouges d'un milieu extérieur, ladite tête comportant:
- une fibre optique formant une partie courbe destinée à relier les deux tronçons de fibre et à venir en contact avec le milieu extérieur pour détecter les signatures infrarouges perturbant la propagation des ondes évanescentes se propageant le long de la fibre, et
- des moyens destinés à protéger la partie courbe contre des agressions mécaniques extérieures, tout en garantissant une zone de contact entre le milieu extérieur et ladite partie courbe,

lesdits moyens destinés à protéger la partie courbe étant constitués d'un premier flasque et d'un deuxième flasque entre lesquels est placée ladite partie courbe, ledit premier flasque comportant un conduit d'écoulement destiné à permettre l'écoulement d'un milieu extérieur liquide entre les flasques,
ladite tête étant caractérisée en ce que ledit deuxième flasque comporte un plot dont une extrémité est contre ledit deuxième flasque et une extrémité est en face de l'embouchure du conduit d'écoulement et à distance du premier flasque, et ladite partie courbe de la fibre comportant une spire est enroulée autour du plot.

Avantageusement, chaque flasque présente deux excroissances, chacune étant prévue pour venir en vis-à-vis d'une excroissance de l'autre flasque, et entre chaque paire d'excroissances est logée une extrémité de la partie courbe.

Avantageusement, chaque paire d'excroissances comporte une nervure et un plan usinables pour former des surfaces d'appui selon deux directions différentes.

Avantageusement, au moins un flasque comporte des nervures usinables pour former des surfaces d'appui selon deux directions différentes.

L'invention propose également, comme définit dans la revendication 5, un capteur comportant:
- une gaine de protection renfermant deux tronçons de fibre optique permettant la propagation de la lumière infrarouge à au moins une longueur d'onde infrarouge et générant vers l'extérieur des ondes évanescentes pour détecter des signatures infrarouges d'un milieu extérieur,
- une tête selon l'une des variantes précédentes, et
- un connecteur assurant la fixation de la tête sur la gaine de protection.

L'invention propose également, comme définit dans la revendication 6, un système de spectrométrie, caractérisé en ce qu'il comporte un capteur selon la variante précédente.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un exemple d'un capteur à fibre optique à ondes évanescentes.
La Fig. 2 représente schématiquement un système de spectrométrie déportée utilisant une fibre optique à ondes évanescentes.

Les Figs. 3 et 4 représentent une tête selon un exemple qui n'est pas inclus dans l'invention telle que revendiquée pour protéger la partie courbe de la fibre qui est destinée à être en contact avec le milieu extérieur.

Les Figs. 5 et 6 représentent une tête selon un mode de réalisation de l'invention.

Les Figs. 7 et 8 montrent les détails d'implantation d'une tête pour un capteur selon l'invention.

Les Figs. 9 et 10 montrent les détails d'implantation d'une autre tête pour un capteur selon l'invention.

Le système de la Fig. 2 est destiné à mettre en oeuvre une technique FEWS telle que décrite dans la partie introductive. Ce système comporte un capteur 10 comportant une fibre optique à ondes évanescentes tel que décrit en relation avec la Fig. 1. En particulier, ce capteur 10 comporte au moins une fibre optique permettant la propagation de la lumière infrarouge à au moins une longueur d'onde infrarouge et générant vers l'extérieur des ondes évanescentes pour détecter des signatures infrarouges d'un milieu extérieur. La fibre comporte sur sa longueur deux tronçons de fibre 11 et 12 pour le guidage d'une onde infrarouge, et une partie courbe 15 qui relie les deux tronçons de fibre. Cette partie courbe 15 est destinée à venir en contact avec le milieu extérieur pour détecter les signatures infrarouges perturbant la propagation des ondes évanescentes se propageant le long de la fibre. A cet effet, la partie courbe 15 est par exemple plongée dans une éprouvette contenant un échantillon d'un liquide à analyser.

Le système comporte également un spectromètre SPEC relié à une première extrémité 26 de la fibre optique du capteur 10 via un concentrateur pour émettre un signal de longueur d'onde infrarouge.

La deuxième extrémité 28 de la fibre optique du capteur 10 est reliée à un détecteur infrarouge DET via un concentrateur pour recevoir le signal infrarouge émis de la première extrémité 26 à cette deuxième extrémité 28 via les tronçons 11 et 12 et la partie courbe 15. Le détecteur DET est relié à un amplificateur AMP du signal reçu par le détecteur DET. Le signal amplifié est alors envoyé au spectromètre SPEC qui comporte (ou est en relation avec) une unité UT de traitement de signal permettant de comparer le spectre du signal infrarouge reçu sur la deuxième extrémité 28 au spectre du signal infrarouge émis sur la première extrémité 26. Cette comparaison permet d'évaluer la perturbation apportée par l'échantillon ou plus généralement par le milieu extérieur sur la partie courbe 15 du capteur 10.

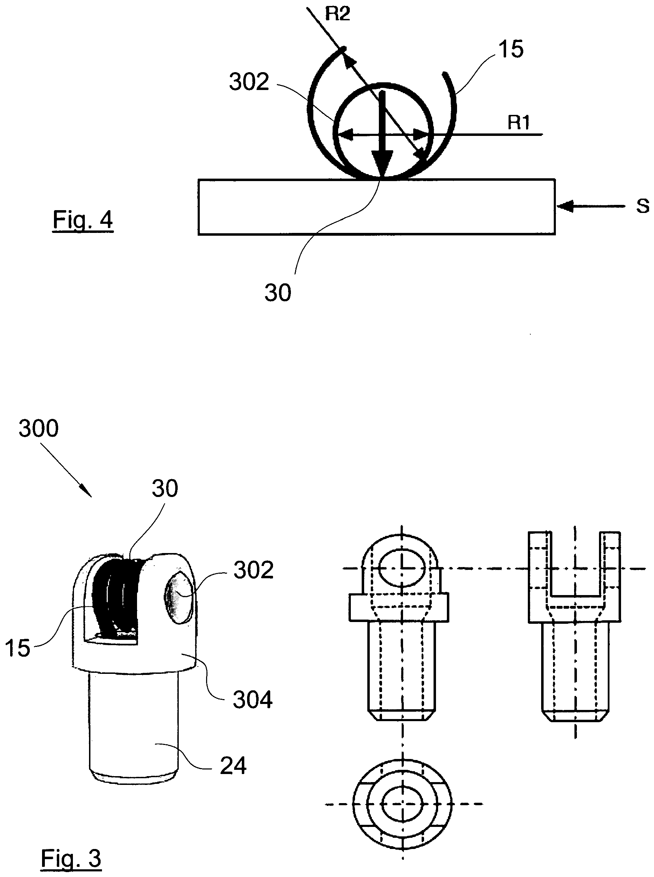

La Fig. 3 montre une vue en perspective d'une tête 300, ainsi qu'une vue de face, une vue de côté et une vue de dessus. La tête 300 porte la partie courbe 15 de la fibre et elle comporte des moyens pour appliquer une force de la partie courbe 15 sur le milieu extérieur S, alors solide tel qu'un tissu humain par exemple, au niveau de la zone de contact 30 et des moyens pour protéger la partie courbe 15 de la fibre contre des agressions mécaniques extérieures, tout en garantissant une zone de contact (30, Fig. 4) entre le milieu extérieur et la partie courbe 15 de la fibre.

Dans le cas de la Fig. 3, les moyens pour appliquer une force sont constitués d'un axe 302. La Fig. 4 montre le principe d'application de la force. Lorsqu'un opérateur tient en main le capteur 100 par la gaine de protection 24 et qu'il met la partie courbe 15 de la fibre en contact sur le milieu extérieur en exerçant une légère force de pression, l'axe 302 transmet cette force à la partie courbe 15 de la fibre, représentée ici par une flèche verticale. Cette partie courbe 15 de la fibre se trouve alors en pression entre l'axe 302 et le milieu S augmentant ainsi l'absorption de certaines longueurs d'onde du flux circulant dans la fibre par des substances de ce milieu S, la zone d'ondes évanescentes se situant dans un périmètre de quelques microns à l'extérieur de la fibre.

Des assemblages mécaniques, autres qu'un axe 302, peuvent être tant que ces moyens permettent de transmettre la force exercée, par un opérateur, à la partie courbe 15 de la fibre, alors en contact avec le milieu extérieur S.

Selon un mode de réalisation particulier, la partie courbe 15 de la fibre comporte une spire et l'axe 302 est glissé à l'intérieur de cette spire. L'enroulement en spire de la partie courbe 15 de la fibre permet d'augmenter la surface de la fibre en contact avec le milieu extérieur.

De préférence, le rayon R1 de courbure de l'axe 302 est de 10% inférieur au rayon R2 de la spire et ce rayon R1 de courbure de l'axe 302 est prévu pour éviter tout cisaillement de la fibre.

Ce mode est avantageux car il permet de s'affranchir des problèmes de dilatation différentielle.

Selon la Fig. 3, les moyens pour protéger la partie courbe 15 de la fibre sont une chape 304 à axe traversant 302. L'axe 302 s'étend en travers de la chape 302 et est glissé à l'intérieur de la spire. D'autres formes de chape à axe traversant peuvent bien évidemment être utilisées. La chape 304 peut comporter également une partie d'un connecteur20. L'autre partie de ce connecteur 20 étant alors solidaire, par exemple de la gaine 24 dans laquelle sont logés les tronçons 11 et 12 de la fibre.

La chape 302 forme ainsi la tête 22 pour un capteur 100 et qui peut être reliée à la gaine 24 de manière amovible pour que cette tête 22 de capteur 100 soit remplacée en cas de défaillance

Dans le cadre de l'invention, le système de spectrométrie est mis en ouvre avec un capteur 10 selon l'invention tel que décrit ci-après, c'est à dire présentant une tête particulière.

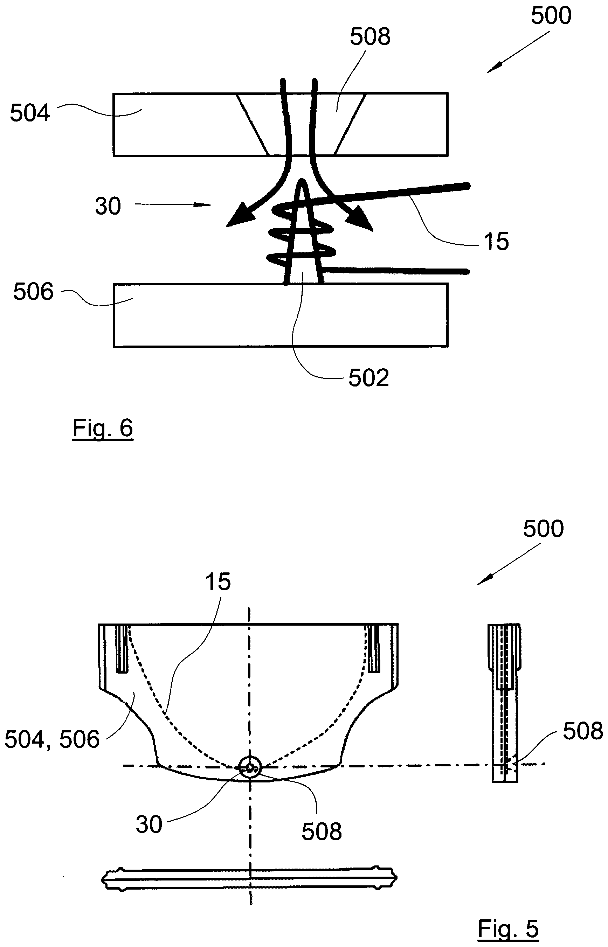

La Fig. 5 montre les vues de face, de dessus et de côté d'une tête 500 selon l'invention et la Fig. 6 montre le principe d'utilisation de la tête 500 dans un écoulement d'un milieu extérieur alors liquide.

Ce mode de réalisation est particulièrement avantageux car l'écoulement du milieu extérieur sur la partie courbe 15 de la fibre permet une meilleure imprégnation de la fibre avec les substances de ce milieu comparée à ce qu'elle est habituellement lorsque la fibre est trempée dans ce milieu.

La tête 500 du capteur 100 comporte des moyens pour assurer un contact de la partie courbe 15 de la fibre avec l'écoulement du milieu extérieur.

La partie courbe 15 de la fibre comporte une spire enroulée autour d'un plot 502 de la tête 500 maintenu en position fixe par rapport à l'écoulement du liquide. L'enroulement en spire de la partie courbe 15 de la fibre permet d'augmenter la surface de la fibre en contact avec le milieu extérieur.

De préférence, le rayon R1 de courbure du plot 502 est de 10% inférieur au rayon R2 de la spire et ce rayon R1 de courbure du plot 502 est prévu pour éviter tout cisaillement de la fibre.

Ce mode est avantageux car il permet de s'affranchir des problèmes de dilatation différentielle.

La tête 500 comporte des moyens pour protéger la partie courbe 15 de la fibre contre des agressions mécaniques extérieures, tout en garantissant une zone de contact 30 entre le milieu extérieur et ladite partie courbe 15 de la fibre.

Les moyens pour protéger la partie courbe 15 de la fibre se matérialisent, ici, par deux flasques 504 et 506. Le flasque 504 comporte un conduit d'écoulement 508 qui permet au liquide de s'écouler entre les deux flasques 504 et 506 (les deux flèches courbes matérialisent cet écoulement), et l'autre flasque 506 comporte le plot 502. Les deux flasques 504 et 506 sont maintenus en position l'un par rapport à l'autre de manière à ce que le plot 502 se trouve en face de l'embouchure du conduit d'écoulement 508.

Les flasques 504 et 506 peuvent avoir d'autres formes que celles représentées ici.

Les flasques 504 et 506 peuvent comporter également une partie d'un connecteur 20. L'autre partie de ce connecteur étant alors solidaire de la gaine de protection 24. Ainsi, ces flasques 504 et 506 forment une tête 500 du capteur 100 qui peut être amovible.

Les modes de réalisation des moyens pour protéger la partie courbe de la fibre qui est destinée à être en contact avec le milieu extérieur n'ont été donnés ici qu'à titre d'exemple et ne limitent en rien la portée de la présente invention. Toute autre variante de forme de ces moyens peut être envisagée mais également tout autre assemblage mécanique tant que ces assemblages permettent de protéger cette partie courbe de la fibre comme des agressions mécaniques extérieures tout en garantissant une zone de contact entre le milieu extérieur et ladite partie courbe de la fibre. En particulier, lorsque le milieu extérieur est gazeux, ces moyens peuvent se matérialiser par un tube percé de trous débouchant sur cette partie courbe de fibre.

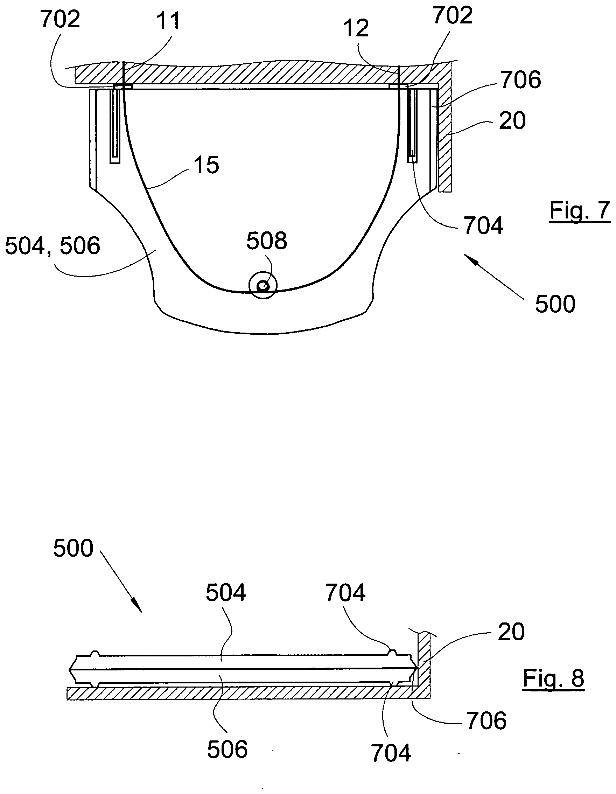

La Fig. 7 et la Fig. 8 montrent la tête 500 lorsqu'elle est positionnée dans la continuité du connecteur 20 et de la gaine de protection 24 pour former le capteur 100 selon l'invention. Les moyens de fixation de la tête 500 ne sont pas représentés et peuvent prendre toutes les formes appropriées. Dans ce mode de réalisation, les extrémités de la partie courbe 15 sont disposées sur une même face de la tête 500.

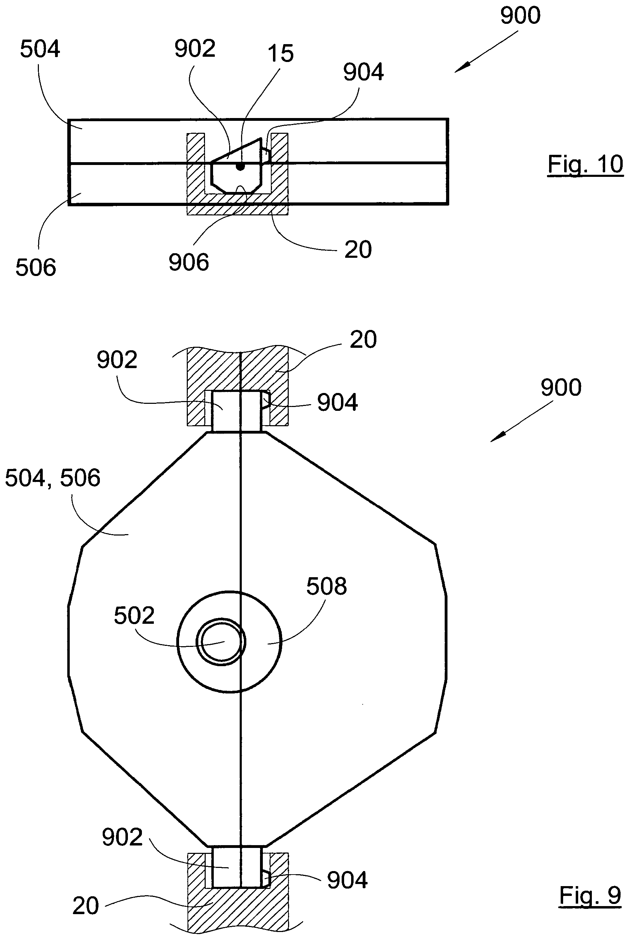

La Fig. 9 et la Fig. 10 montrent une tête 900 selon un autre mode de réalisation lorsqu'elle est positionnée dans la continuité du connecteur 20 et de la gaine de protection 24 pour former le capteur 100 selon l'invention. Les moyens de fixation de la tête 900 ne sont pas représentés et peuvent prendre toutes les formes appropriées. La tête 900 présente également un conduit d'écoulement 508 et un plot 502, mais les extrémités de la partie courbe 15 sont diamétralement opposées.

Chaque extrémité de la partie courbe 15 est logée dans un sabot 702, 902 qui est constitué de deux excroissances, chacune étant issue de l'un des flasques 504 et 506. L'extrémité de la partie courbe 15 est donc placée entre deux excroissances, chacune étant issue de l'un des flasques 504, 506. Chaque flasque 504, 506 présente deux excroissances, chacune étant prévue pour venir en vis-à-vis d'une excroissance de l'autre flasque 506, 504, et entre chaque paire d'excroissances est logée une extrémité de la partie courbe 15.

La face de chaque sabot 702, 902 par où l'extrémité de la partie courbe 15 est accessible est susceptible d'être usinée pour permettre la réalisation d'une bonne surface de contact et une bonne propagation de la lumière infrarouge à la jonction avec le tronçon 11, 12 correspondant.

Dans le cas des Figs. 7 et 8, le bon positionnement des extrémités de la partie courbe 15 par rapport aux extrémités des tronçons 11 et 12 est assuré par deux nervures 704 qui sont réalisées sur les faces extérieures des flasques 504 et 506. Les nervures 704 viennent en appui sur une paroi du connecteur 20 et sont usinables pour affiner le positionnement. Il n'est donc pas nécessaire d'usiner la face entière de chaque flasque 504, 506 mais uniquement les nervures 704 concernées.

Dans le mode de réalisation de l'invention présenté sur les Figs. 7 et 8, il y a deux nervures 704 par flasque 504, 506, mais si un seul flasque, ici le flasque 506 est susceptible d'être utilisé pour effectuer le positionnement par rapport au connecteur 20, seul ce flasque 506 portera des nervures 704.

Le bon positionnement des extrémités de la partie courbe 15 par rapport aux extrémités des tronçons 11 et 12 est également assuré par une nervure latérale 706 qui est ici réalisée par la jonction des deux flasques 504 et 506 et qui est également usinable pour venir en contact avec une autre paroi du connecteur 20.

D'une manière générale, au moins un flasque 504, 506 comporte des nervures 704 et 706 usinables pour former des surfaces d'appui selon deux directions différentes afin de positionner convenablement les extrémités de la partie courbe 15 par rapport aux extrémités des tronçons 11 et 12.

Les nervures 704 et 706 ont des surfaces d'appui réduites par rapport à la surface du flasque 504, 506 de laquelle elles sont issues.

Dans le cas des Figs. 9 et 10, le bon positionnement des extrémités de la partie courbe 15 par rapport aux extrémités des tronçons 11 et 12 est assuré par deux nervures 904. Chaque nervure 904 est réalisée sur une face de chaque sabot 902 et les deux faces sont ici coplanaires. Les nervures 904 viennent en appui sur une paroi du connecteur 20 et sont usinables pour affiner le positionnement.

Le bon positionnement des extrémités de la partie courbe 15 par rapport aux extrémités des tronçons 11 et 12 est également assuré par deux plans 906. Chaque plan 906 est réalisé sur une face de chaque sabot 902 et les deux faces sont ici coplanaires et perpendiculaires aux faces portant les nervures 904. Chaque plan 904 est également usinable pour venir en contact avec une autre paroi du connecteur 20.

D'une manière générale, chaque sabot 902, c'est à dire chaque paire d'excroissances, comporte une nervure 904 et un plan 906 usinables pour former des surfaces d'appui selon deux directions différentes afin de positionner convenablement les extrémités de la partie courbe 15 par rapport aux extrémités des tronçons 11 et 12.

Les nervures 904 et les plans 906 ont des surfaces d'appui réduites par rapport à la surface du flasque 504, 506.

## Revendications

1. Tête (500, 900) pour un capteur (100) comportant deux tronçons de fibre optique (11, 12) permettant la propagation de la lumière infrarouge à au moins une longueur d'onde infrarouge et générant vers l'extérieur des ondes évanescentes pour détecter des signatures infrarouges d'un milieu extérieur, ladite tête (500, 900) comportant :
- une fibre optique formant une partie courbe (15) destinée à relier les deux tronçons de fibre (11, 12) et à venir en contact avec le milieu extérieur pour détecter les signatures infrarouges perturbant la propagation des ondes évanescentes se propageant le long de la fibre, et
- des moyens (504, 506) destinés à protéger la partie courbe (15) contre des agressions mécaniques extérieures, tout en garantissant une zone de contact (30) entre le milieu extérieur et ladite partie courbe (15),
lesdits moyens (504, 506) destinés à protéger la partie courbe (15) étant constitués d'un premier flasque (504) et d'un deuxième flasque (506) entre lesquelles est placée ladite partie courbe (15), ledit premier flasque (504) comportant un conduit d'écoulement (508) destiné à permettre l'écoulement d'un milieu extérieur liquide entre les flasques (504, 506),
ladite tête (500, 900) étant **caractérisée en ce que** ledit deuxième flasque (506) comporte un plot (502) dont une extrémité est contre ledit deuxième flasque (506) et une extrémité est en face de l'embouchure du conduit d'écoulement (508) et à distance du premier flasque (504), et **en ce que** ladite partie courbe (15) de la fibre comportant une spire est enroulée autour du plot (502).

2. Tête (900) selon la revendication 1, **caractérisée en ce que** chaque flasque (504, 506) présente deux excroissances, chacune étant prévue pour venir en vis-à-vis d'une excroissance de l'autre flasque (506, 504), et **en ce que** entre chaque paire d'excroissances est logée une extrémité de la partie courbe (15).

3. Tête (900) selon la revendication 2, **caractérisée en ce que** chaque paire d'excroissances comporte une nervure (904) et un plan (906) usinables pour former des surfaces d'appui selon deux directions différentes.

4. Tête (500) selon l'une des revendications 1 ou 2, **caractérisée en ce que** au moins un flasque (504, 506) comporte des nervures (704, 706) usinables pour former des surfaces d'appui selon deux directions différentes.

5. Capteur (100) comportant :
- une gaine de protection (24) renfermant deux tronçons de fibre optique (11, 12) permettant la propagation de la lumière infrarouge à au moins une longueur d'onde infrarouge et générant vers l'extérieur des ondes évanescentes pour détecter des signatures infrarouges d'un milieu extérieur,
- une tête (500, 900) selon l'une des revendications 1 à 4, et
- un connecteur (20) assurant la fixation de la tête (500, 900) sur la gaine de protection (24).

6. Système de spectrométrie, **caractérisé en ce qu'**il comporte un capteur (100) selon la revendication 5.

## Patentansprüche

1. Kopf (500, 900) für einen Sensor (100) mit zwei Abschnitten einer optischen Faser (11, 12), die die Ausbreitung von Infrarotlicht mit mindestens einer Infrarotwellenlänge ermöglicht und nach außen evaneszente Wellen erzeugt, um Infrarotsignaturen eines äußeren Mediums zu detektieren, wobei der Kopf (500, 900) Folgendes aufweist:
- eine optische Faser, die einen gekrümmten Teil (15) bildet, der dazu bestimmt ist, die beiden Faserabschnitte (11, 12) zu verbinden und mit dem äußeren Medium in Kontakt zu kommen, um die Infrarotsignaturen zu detektieren, die die Ausbreitung der evaneszenten Wellen, die sich entlang der Faser ausbreiten, stören, und
- Mittel (504, 506), die dazu bestimmt sind, den gekrümmten Teil (15) vor äußeren mechanischen Angriffen zu schützen und dabei einen Kontaktbereich (30) zwischen dem äußeren Medium und dem gekrümmten Teil (15) zu gewährleisten,
wobei die Mittel (504, 506) zum Schützen des gekrümmten Teils (15) aus einem ersten Flansch (504) und einem zweiten Flansch (506) gebildet sind, zwischen denen der gekrümmte Teil (15) angeordnet ist, wobei der erste Flansch (504) einen Strömungskanal (508) aufweist, der dazu bestimmt ist, das Strömen eines flüssigen äußeren Mediums zwischen den Flanschen (504, 506) zu ermöglichen, wobei der Kopf (500, 900) **dadurch gekennzeichnet ist, dass** der zweite Flansch (506) einen Klotz (502) aufweist, dessen eines Ende am zweiten Flansch (506) anliegt und dessen anderes Ende der Mündung des Strömungskanals (508) gegenüberliegt und vom ersten Flansch (504) beabstandet ist, und dass der gekrümmte Teil (15) der Faser eine Windung aufweist, die um den Klotz (502) gewickelt ist.

2. Kopf (900) nach Anspruch 1, **dadurch gekennzeichnet, dass** jeder Flansch (504, 506) zwei Auswüchse aufweist, die jeweils dazu vorgesehen sind, einem Auswuchs des anderen Flanschs (506, 504) gegenüberzuliegen, und dass zwischen jedem Auswuchspaar ein Ende des gekrümmten Teils (15) angeordnet ist.

3. Kopf (900) nach Anspruch 2, **dadurch gekennzeichnet, dass** jedes Auswuchspaar eine Rippe (904) und eine Ebene (906) aufweist, die so bearbeitet werden können, dass sie Auflageflächen in zwei verschiedene Richtungen bilden.

4. Kopf (500) nach einem der Ansprüche 1 oder 2, **dadurch gekennzeichnet, dass** mindestens ein Flansch (504, 506) Rippen (704, 706) aufweist, die so bearbeitet werden können, dass sie Auflageflächen in zwei verschiedene Richtungen bilden.

5. Sensor (100), umfassend:
- eine Schutzhülle (24), die zwei Abschnitte einer optischen Faser (11, 12) umschließt, die die Ausbreitung von Infrarotlicht mit mindestens einer Infrarotwellenlänge ermöglicht und nach außen evaneszente Wellen erzeugt, um Infrarotsignaturen eines äußeren Mediums zu detektieren,
- einen Kopf (500, 900) nach einem der Ansprüche 1 bis 4 und
- einen Verbinder (20), der die Befestigung des Kopfs (500, 900) an der Schutzhülle (24) gewährleistet.

6. Spektometersystem, **dadurch gekennzeichnet, dass** es einen Sensor (100) nach Anspruch 5 aufweist.

## Claims

1. Head (500, 900) for a sensor (100) comprising two sections of optical fibre (11, 12) for propagating infrared light at at least one infrared wavelength and generating evanescent waves to the outside in order to detect infrared signatures of an external medium, said head (500, 900) comprising:
- an optical fibre forming a curved part (15) intended to connect the two sections of fibre (11, 12) and to come into contact with the external medium in order to detect the infrared signatures interfering with the propagation of the evanescent waves propagating along the fibre, and
- means (504, 506) intended to protect the curved part (15) against external mechanical stresses, while guaranteeing a contact area (30) between the external medium and said curved part (15),
- said means (504, 506) intended to protect the curved part (15) consisting of a first plate (504) and a second plate (506) between which said curved part (15) is placed, said first plate (504) comprising a flow conduit (508) intended to allow the flow of the liquid external medium between the plates (504, 506),
- said head (500, 900) being **characterized in that** said second plate (506) comprises a stud (502) an end of which is against said second plate (506) and an end is situated facing the opening of the flow conduit (508) and away from the first plate (504), and **in that** said curved part (15) of the fibre comprises a turn wound around the stud (502).

2. Head (900) according to claim 1, **characterized in that** each plate (504, 506) has two protrusions, each being designed to come opposite a protrusion on the other plate (506, 504), and **in that** between each pair of protrusions one end of the curved part (15) is housed.

3. Head (900) according to claim 1, **characterized in that** each pair of protrusions comprises a rib (904) and a plane (906) that can be machined so as to form support surfaces in two different directions

4. Head (500) according to one of the claims 1 or 2, **characterized in that** at least one plate (504, 506) comprises ribs ribs (704, 706) that can be machined so as to form support surfaces in two different directions.

5. Sensor (100) comprising:
- a protective sheath (24) enclosing two sections of optical fibre (11, 12) for propagating infrared light at at least one infrared wavelength and generating evanescent waves to the outside in order to detect infrared signatures of an external medium,
- a head (500, 900) according to one of claims 1 to 4, and
- a connector (20) fixing the head (500, 900) on the protective sheath (24).

6. Spectrometry system, **characterized in that** it comprises a sensor (100) according to claim 5.
